# EUROPEAN PATENT APPLICATION

(11) **EP 2 019 321 A1**
(43) Date of publication of application: **28.01.2009**
(21) Application number: 07741948.9
(22) Date of filing: 19.04.2007
(51) Int. Cl.: G01N 35/02, G01N 33/543

(54) **CLEANING EQUIPMENT AND AUTOMATIC ANALYZER**

(30) Priority: 17.05.2006 JP 2006137730
(71) Applicant: Olympus Corporation, Tokyo 151-0072 (JP)
(72) Inventor: KATO, Ko, Shibuya-ku, Tokyo 151-0072 (JP)
(74) Representative: von Hellfeld, Axel
(86) International application number: PCT/JP2007/058512
(87) International publication number: WO 2007/132631

(57) **Abstract**

Provided is a cleaning apparatus and an automatic analyzer which can accurately detect an abnormality of a liquid-surface position of a reaction liquid contained in a reaction vessel in a B/F cleaning of the reaction liquid undergoing a heterogeneous reaction, and which can easily perform maintenance. To this end, included are a plurality of air nozzles that discharge air from above each of the distal ends of a suction nozzle and a discharge nozzle, the suction nozzle sucking in at least some of reaction liquid undergoing a heterogeneous reaction, the discharge nozzle discharging a predetermined B/F cleaning fluid, the air nozzles being provided corresponding respectively to a plurality of pairs of the suction nozzle and the discharge nozzle; an air supply unit that supplies air to the plurality of air nozzles at a time; a plurality of pressure sensors each of which detects a pressure of air which is supplied by the air supply unit and which is in the vicinity of each proximal end of the air nozzles; and a control unit that individually controls the B/F-cleaning-fluid discharging operation of the discharge nozzles based on the respective pressures detected by the plurality of pressure sensors and changes in the pressures.

## Description

### TECHNICAL FIELD

The present invention relates to a cleaning apparatus which carries out a B/F cleaning of reaction liquid undergoing a heterogeneous reaction, and to an automatic analyzer which includes the cleaning apparatus and analyzes a specimen such as blood and body fluid.

### BACKGROUND ART

An immunological analysis of a specimen such as blood and body fluid involves a B/F cleaning process that causes an antigen-antibody reaction on an antigen (or antibody) that is attached to a solid phase and an antibody (or an antigen) that is a reference material, and a B/F cleaning process, and then adds predetermined B/F cleaning fluid thereto to separate a free antigen or antibody in the reaction liquid from the solid phase and thus to clean it.

Conventionally, in the abovementioned B/F cleaning process, as a technology to detect a situation where the reaction liquid contained in a reaction vessel is about to overflow, there has been known a technology that, with a nozzle made of conductive members for discharging a B/F cleaning fluid or a stir bar made of conductive members for stirring liquid in the reaction vessel, and a detection unit made of conductive members and provided in the vicinity of a lower end of the nozzle, detects an abnormality of a liquid-surface position by a liquid-surface detection signal generated between the nozzle or the stir bar and the detection unit, and then stops discharging cleaning fluid from the nozzle based on the detection result (e.g., see Patent Document 1).

Patent Document 1: Japanese Examined Utility Model Application publication No. H2-13978

### DISCLOSURE OF INVENTION

### PROBLEM TO BE SOLVED BY THE INVENTION

In the conventional technology described above, however, when the nozzle, the stir bar, or the detection unit, which is made of conductive members, is corroded by the B/F cleaning fluid or the like, the abnormality of the liquid surface of the reaction liquid might not be accurately detected. Further, prevention of the corrosion of the conductive members requires a regular cleaning or the like with the conductive members removed from the device. The conductive members, which are connected with various kinds of electrical components, are not easy to remove, resulting in much burden for maintenance.

The present invention is made in view of the foregoing, and an object of the present invention is to provide a cleaning apparatus and an automatic analyzer, which can accurately detect an abnormality of a liquid-surface position of the reaction liquid in the reaction vessel, and can easily perform maintenance in the B/F cleaning of the reaction liquid undergoing the heterogeneous reaction.

### MEANS FOR SOLVING PROBLEM

To solve the above problems and achieve an object, a cleaning apparatus includes a plurality of pairs of a suction nozzle for sucking in at least some of reaction liquid undergoing a heterogeneous reaction and a discharge nozzle for discharging a predetermined B/F cleaning fluid, to perform a B/F cleaning of the reaction liquid. The cleaning apparatus includes a plurality of air nozzles that is provided corresponding respectively to the plurality of pairs and discharges air from above each of distal ends of the suction nozzle and the discharge nozzle of a corresponding pair; an air supply unit that supplies air to the plurality of air nozzles at a time; a plurality of pressure sensors each of which detects a pressure of air which is supplied by the air supply unit and which is in the vicinity of each proximal end of the air nozzles; and a control unit that individually controls B/F-cleaning-fluid discharging operation of the discharge nozzles based on the respective pressures detected by the plurality of pressure sensors and changes in the pressures.

In the cleaning apparatus according to the invention, the control unit stops the B/F-cleaning-fluid discharging operation of the discharge nozzle corresponding to an air nozzle, out of the plurality of air nozzles, in which each of a pressure in the vicinity of the proximal end and a change in the pressure are a value outside a predetermined range.

An automatic analyzer according to the present invention analyzes a specimen to be analyzed by causing a heterogeneous reaction on the specimen, and includes any one of the cleaning apparatuses according to the present invention.

### EFFECT OF THE INVENTION

The present invention includes a plurality of air nozzles that discharge air from above each of the distal ends of a suction nozzle and a discharge nozzle, the suction nozzle sucking in at least some of reaction liquid undergoing a heterogeneous reaction, the discharge nozzle discharging a predetermined B/F cleaning fluid, the air nozzles being provided corresponding respectively to a plurality of pairs of the suction nozzle and the discharge nozzle; an air supply unit that supplies air to the plurality of air nozzles at a time; a plurality of pressure sensors each of which detects a pressure of air which is supplied by the air supply unit and which is in the vicinity of each proximal end of the air nozzles; and a control unit that individually controls the B/F-cleaning-fluid discharging operation of the discharge nozzles based on the respective pressures detected by the plurality of pressure sensors and changes in the pressures. Accordingly, an abnormality of the liquid-surface position of the reaction liquid contained in the reaction vessel can be accurately detected, and maintenance can be easily performed in the B/F cleaning of the reaction liquid undergoing the heterogeneous reaction.

### BRIEF DESCRIPTION OF DRAWINGS

FIG. 1 is a diagram showing a configuration of
relevant parts of an automatic analyzer according to an embodiment of the present invention.
FIG. 2 is a diagram showing a configuration of relevant parts of a cleaning apparatus according to the embodiment of the present invention.
FIG. 3 is an illustration showing an overview of an operation of a B/F cleaning by the cleaning apparatus according to the embodiment of the present invention.
FIG. 4 shows time change of air pressure detected in the case shown in FIG. 3 and pressure differentiation thereof.
FIG. 5 is an illustration showing a situation where an abnormality occurs in the operation of the B/F cleaning by the cleaning apparatus according to the embodiment of the present invention.
FIG. 6 shows time change of air pressure detected in the case shown in FIG. 5 and pressure differentiation thereof.
FIG. 7 shows a relation between distance from a distal end of an air nozzle to a pressure sensor and air pressure inside a pipe detected by the pressure sensor.
FIG. 8 shows time change of air pressure detected in a situation where the distal end of the air nozzle is closed by liquid surface inside the reaction vessel when the discharge of air is started and pressure differentiation thereof.

### EXPLANATIONS OF LETTERS OR NUMERALS

- 1: Automatic analyzer
- 2a: Air nozzle
- 2b: Suction nozzle
- 2c: Discharge nozzle
- 3: Nozzle drive unit
- 4: Pressure sensor
- 5: Signal processing unit
- 6, 10: Syringe
- 6a, 10a: Cylinder
- 6b, 10b: Piston
- 7, 11: Piston drive unit
- 8: Buffer tank
- 9, 13: Pump
- 12: Inlet valve
- 14: Liquid vessel
- 21: Specimen vessel
- 22: Rack
- 31: Carrier reagent vessel
- 41: Liquid-reagent vessel
- 51: Reactor vessel
- 81, 82, 83, 84: Pipe
- 101: Measurement system
- 102: Specimen transfer unit
- 103: Carrier-reagent-vessel holder unit
- 104: Liquid-reagent-vessel holder unit
- 105: Reactor-vessel holder unit
- 106: Specimen dispensing unit
- 107: Carrier reagent dispensing unit
- 108: Liquid-reagent dispensing unit
- 109: Reactor-vessel transfer unit
- 110: Cleaning unit
- 111: Stirring unit
- 112: Photometry unit
- 119: Reactor-vessel storage unit
- 129: Reactor-vessel disposing unit
- 201: Control analysis system
- 202: Analysis calculation unit
- 203: Input unit
- 204: Output unit
- 205: Memory unit
- 206: Control unit
- 801: Manifold
- CR1, CR2, CR3: Information-code reading unit
- G: Nozzle group
- L1, L2: Liquid
- L_{BF} B/F: cleaning fluid
- W1, W3, W5: Pressure waveform
- W2, W4, W6: Pressure differentiation waveform

### BEST MODE(S) FOR CARRYING OUT THE INVENTION

Exemplary embodiments (referred to below as "embodiment") of the present invention are described below with reference to accompanying drawings.

### <Overview of Immunological Analysis Process>

Firstly, an outline of an immunological analysis process performed by an automatic analyzer according to an embodiment of the present invention is described below. In the embodiment, an immunoassay with a heterogeneous reaction is carried out. The following describes a case where a concentration of a predetermined antigen inside a specimen is measured with an enzyme immunoassay (EIA), as an example. In the immunoassay process, the first immunological reaction (antigen-antibody reaction) is caused by firstly mixing the specimen and a solid phase sensitized by an antibody which is specifically combined to the predetermined antigen inside the specimen. In the description below, a reaction vessel is applied as the solid phase. Specifically, the predetermined antibody is previously adsorbed in the vicinity of an inner bottom wall of the reaction vessel.

After the first immunological reaction, the B/F cleaning of the reaction liquid is carried out with a predetermined B/F cleaning fluid, and the antibody or a free specimen component (including the antigen) which has not specifically combined to the antibody is separated and removed from the solid phase. Next, an excess enzyme as a reference material is added to cause the second immunological reaction. Similarly, the B/F cleaning of the reaction liquid is carried out after the second immunological reaction, so that the surplus, free reference material or the like is separated and removed from the solid phase. After that, a chromogenic substrate which causes an activation of the enzyme, which is the reference material, is added to the reaction liquid to cause a chromogenic reaction with the reference material, and a chromogenic amount is then optically measured. Finally, a comparison operation between data acquired with the measurement and data (calibration curve) acquired with a standard specimen having a known concentration of an antibody, is performed so as to calculate a concentration of the antigen to be analyzed in the specimen.

Naturally, a concentration of a predetermined antibody in the specimen can be calculated similarly to the above description. In this case, the antigen which is specifically combined to the antibody needs to be previously adsorbed to the solid phase. The analysis of the specimen can be performed by applying an immunoassay with the heterogeneous reaction other than the enzyme immunoassay described above. Such an immunoassay includes fluorescence immunoassay (FIA) using a fluorescent material as the reference material, radioimmunoassay (RIA) using a radio isotope as the reference material, chemoenzymatic immunoassay (CLIA) using a chemiluminescent substrate as the reference material, a spin immunoassay (SIA) using a spin-reagent as the reference material, and the like.

### <Configuration of Automatic Analyzer>

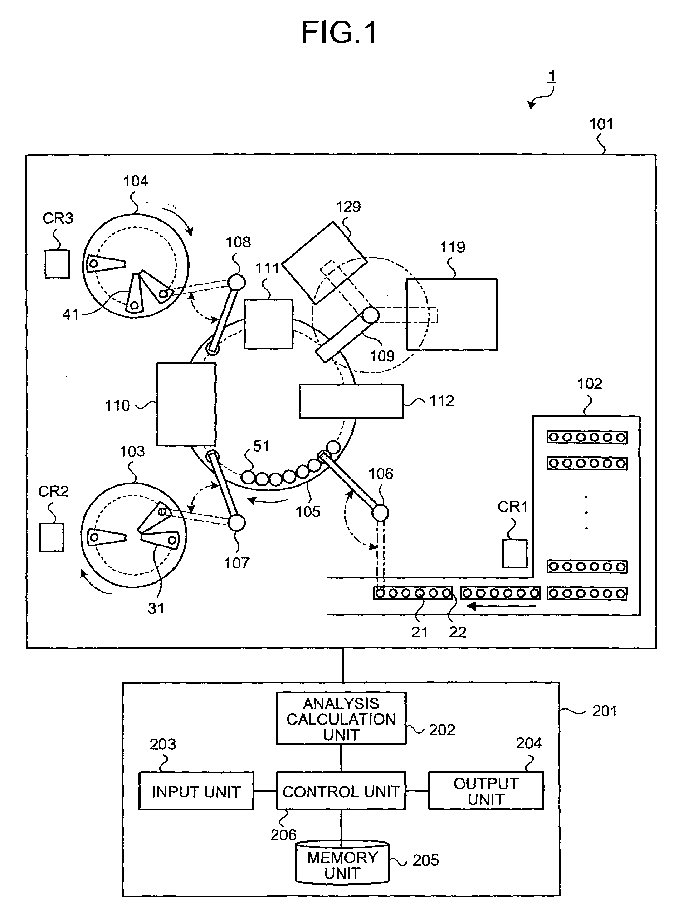

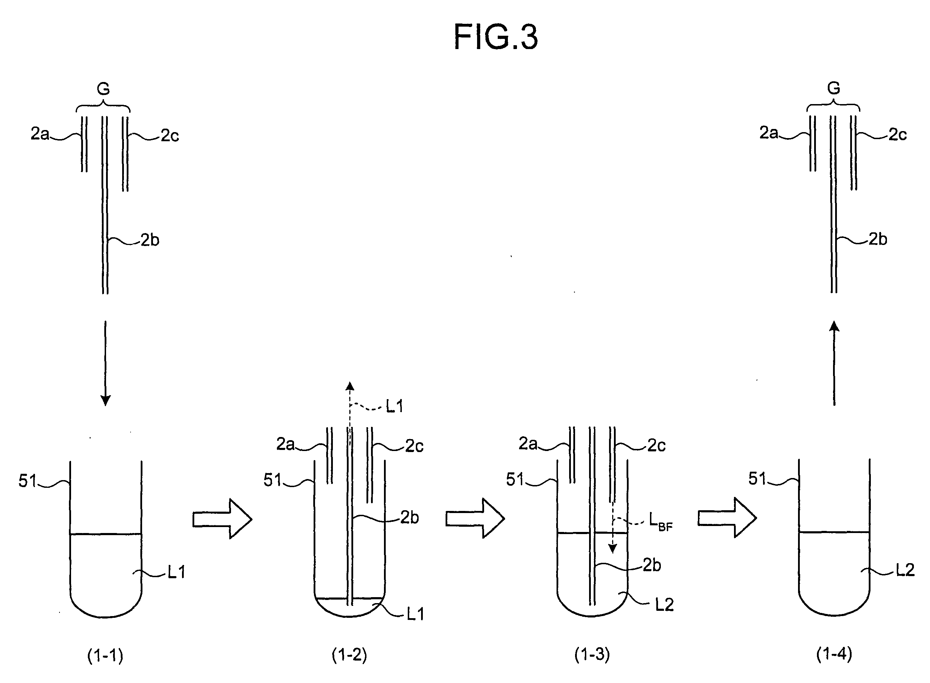

FIG. 1 is a diagram schematically showing a configuration of relevant parts of the automatic analyzer according to the embodiment of the present invention. The automatic analyzer 1 shown in FIG. 1 includes a measurement system 101 which dispenses a reagent and samples such as a specimen into reaction vessels, respectively and performs an optical measurement of liquid in each reaction vessel, and a control analysis system 201 which performs a drive control of the measurement system 101 and performs an analysis of a measurement result by the measurement system 101, and the automatic analyzer 1 is an apparatus that can perform an immunological analysis of components of plural specimens automatically and successively with the two systems cooperating with each other. In the description below, the automatic analyzer 1 is described to perform an immunological measurement with the heterogeneous reaction.

To begin with, the measurement system 101 of the automatic analyzer 1 is described. The measurement system 101 includes a specimen transfer unit 102 which contains and sequentially transfers plural racks 22 provided with specimen vessels 21 for containing the specimens, a carrier-reagent-vessel holder unit 103 which holds a carrier reagent vessel 31 for containing a carrier reagent to be used for an antigen-antibody reaction with the specimen, a liquid-reagent-vessel holder unit 104 which holds a liquid-reagent vessel 41 for containing various kinds of liquid-reagents, and a reaction-vessel holder unit 105 which holds a reaction vessel 51 where the specimen and the reagent are reacted.

The carrier-reagent-vessel holder unit 103 is attached to a wheel holding the carrier reagent vessel 31, and specifically to a bottom surface of the wheel mostly, and includes a drive unit which rotates the wheel around a rotation axis, i.e., a vertical line passing through the center. Similarly to the carrier-reagent-vessel holder unit 103, each of the liquid-reagent-vessel holder unit 104 and the reaction-vessel holder unit 105 includes a wheel and a drive unit which rotates the wheel.

A constant temperature is maintained inside each of the vessel holder units. For example, temperature in the liquid-reagent-vessel holder unit 104 is maintained at a lower temperature than room temperature in order to suppress degradation and degeneration of the reagent, and temperature in the reaction-vessel holder unit 105 is maintained at substantially the same temperature as human body temperature.

Further, the measurement system 101 includes a specimen dispensing unit 106 which dispenses the specimen contained in the specimen vessel 21 on the specimen transfer unit 102 into the reaction vessel 51 held in the reaction-vessel holder unit 105; a carrier-reagent dispensing unit 107 which dispenses the carrier-reagent contained in the carrier-reagent vessel 31 on the carrier-reagent-vessel holder unit 103 into the reaction vessel 51; a liquid-reagent dispensing unit 108 which dispenses the liquid-reagent contained in the liquid-reagent vessel 41 on the liquid-reagent-vessel holder unit 104 into the reaction vessel 51; and a reaction-vessel transfer unit 109 which transfers the reaction vessel 51 to put the reaction vessel 51 in the reaction-vessel holder unit 105 and to take the same from the reaction-vessel holder unit 105.

The specimen vessel 21 has an information code recording medium (not shown) affixed thereto which stores therein an encoded information code, such as a bar code or a two-dimensional code, indicating identification information for identifying the specimen contained in the specimen vessel 21. Similarly, each of the carrier reagent vessel 31 and the liquid-reagent vessel 41 has an information code recording medium (not shown) affixed thereto which stores therein an encoded information code indicating identification information for identifying the reagent contained in the relevant vessel. Accordingly, the measurement system 101 includes an information-code reading unit CR1 which reads the information code affixed to the specimen vessel 21, an information-code reading unit CR2 which reads the information code affixed to the carrier-reagent vessel 31, and an information-code reading unit CR3 which reads the information code affixed to the liquid-reagent vessel 41.

Each of the specimen dispensing unit 106, the carrier-reagent dispensing unit 107, the liquid-reagent dispensing unit 108 includes a narrow tube-like probe to suction and discharge the specimen, an arm to perform an up-down movement along a vertical direction and a rotation movement along a horizontal direction so as to move the probe, and a suction-discharge system which uses a suction and discharge syringe or the like. Each probe is cleaned in an individually-arranged cleaning unit (not shown) after every dispensing operation. Further, in the viewpoint of preventing a contamination or a carry-over, it is preferable to adopt a disposable method with which a detachable tip is put on a distal end of the probe and the tip is replaced after every dispensing operation.

Provided on the operation line of the reaction-vessel transfer unit 109 are a reaction-vessel storage unit 119 which holds unused reaction vessels 51, and a reaction-vessel disposing unit 129 which disposes used reaction vessels 51. The reaction-vessel transfer unit 109 may have any configuration as long as the reaction vessel 51 even with the liquid contained therein can be transferred without spilling liquid.

The configuration of the automatic analyzer 1 continues to be described below. The automatic analyzer 1 includes a cleaning unit 110 which carries out a B/F cleaning of the carrier-reagent; a stirring unit 111 which contains a stir bar to stir the liquid contained in the reaction vessel 51; and a photometry unit 112 which contains a photoelectron multiplier that can detect weak light emitted from the reaction liquid in the reaction vessel 51. Further, to measure fluorescence emitted from the reaction liquid, a light source to emit excitation light may be provided as the photometry unit 112.

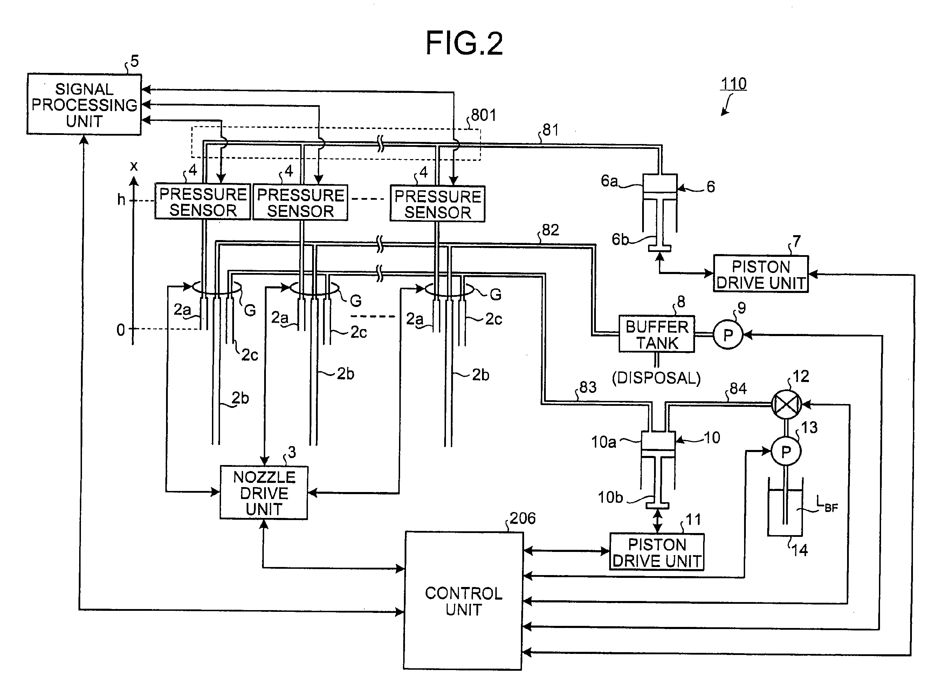

FIG. 2 is an illustration schematically showing an overall configuration of the cleaning unit 110 corresponding to the cleaning apparatus according to the embodiment. The cleaning unit 110 shown in FIG. 2 includes a plurality of nozzle groups G, each of which consists of an air nozzle 2a for discharging air, a suction nozzle 2b for sucking in the liquid in the reaction vessel 51, and a discharge nozzle 2c for discharging a B/F cleaning fluid into the reaction vessel 51. The nozzle groups G are arranged above some of the reaction vessels 51 held in the reaction-vessel holder unit 105 in such a manner that the nozzle groups G are adjacent to each other along a circumference of a circle of the reaction-vessel holder unit 105 similarly to the reaction vessels 51.

Further, the cleaning unit 110 includes a nozzle drive unit 3 which drives each nozzle group G; pressure sensors 4 which each detect air pressure applied in the vicinity of a proximal end of each air nozzle 2a and generate electric signals (analog signals) corresponding to the detection result; and a signal processing unit 5 which amplifies electric signals transmitted from each of the plural pressure sensors 4 and then performs an A/D conversion of the signals.

Each air nozzle 2a is connected via a pipe 81 to a syringe 6 which works as an air supply unit. A distal end of each air nozzle 2a is positioned above each of the distal ends of the suction nozzle 2b and the discharge nozzle 2c of the same nozzle group G. Each air nozzle 2a is positioned a tittle below an upper opening surface of the reaction vessel 51 when the nozzle group G is moved down and inserted into the reaction vessel 51 in the B/F cleaning.

The syringe 6 includes a cylinder 6a and a piston 6b, and performs an air suction or air discharge operation in which the piston 6b is moved by a piston drive unit 7. Alternatively, the air supply unit may be realized by a gas canister and a supply valve which controls an amount of air supplied from the gas canister.

The pipe 81, one end of which is connected to the syringe 6, interconnects the syringe 6 and each air nozzle 2a. Accordingly, air supplied at a time from one syringe 6 is divided by the pipe 81 so as to reach each air nozzle 2a. The branched structure of the pipe 81 is realized by a manifold 801 having at least as many channels as the number of the nozzle groups G.

By setting discharge pressure of the syringe 6 high to the extent that air discharged by each air nozzle 2a does not cause the liquid surface of the liquid contained in the reaction vessel 51 to tremble, the pressure sensor 4 can be made sensitive, and influence from vibration of the pipe 81 can be reduced. As a result, air pressure can be detected stably, which is more preferably.

The suction nozzle 2b is connected via a pipe 82 to a buffer tank 8, and the buffer tank 8 is connected to a pump 9 realized by a vacuum pump. The liquid in the reaction vessel 51 sucked in by the pump 9 is disposed outside through the buffer tank 8. The distal end of the suction nozzle 2b extends downward farther than the distal end of other two nozzles do, and when the nozzle group G is moved down to the reaction vessel 51, the distal end of the suction nozzle 2b reaches the liquid surface in the reaction vessel 51 first.

The discharge nozzle 2c is connected via a pipe 83 to the syringe 10. The syringe 10 includes a cylinder 10a and a piston 10b, and each of the pipe 83 and the cylinder 10a contains a B/F cleaning fluid L_{BF}. Further, the syringe 10 is connected via a pipe 84 to a liquid vessel 14 containing the B/F cleaning fluid L_{BF}. An inlet valve 12 which controls flow of the B/F cleaning fluid L_{BF}, and a pump 13 which sucks in the B/F cleaning fluid L_{BF} from the liquid vessel 14, are sequentially arranged in the pipe 84. To pour the B/F cleaning fluid L_{BF} into the pipe 83 and the cylinder 10a, the inlet valve 12 is opened so that the pump 13 sucks in the B/F cleaning fluid L_{BF}, and the discharge nozzle 2c, the syringe 10, the pipes 83 and 84 are consequently filled with the B/F cleaning fluid L_{BF}, and then the inlet valve is closed to end the operation of the pump 13.

The nozzle drive unit 3 drives the three nozzles (the air nozzle 2a, the suction nozzle 2b, and the discharge nozzle 2c) of each nozzle group G at a time. Therefore, driving the nozzles does not change a relative position among the three nozzles in each nozzle group. Further, the nozzle drive unit 3 may also drive each nozzle group G individually.

In the cleaning unit 110 having the configuration and the function described above, operations of the nozzle drive unit 3, the signal processing unit 5, the piston drive units 7 and 11, the pumps 9 and 13, and the inlet valve 12 are controlled by a control unit 206 of a control analysis system 201 described later.

In the measurement system 101 having the configuration described above, a rotation angle of the reaction-vessel holder unit 105 for one rotational operation is previously determined, and all components are arranged so that the rotation allows the dispense of the sample Sp and various kinds of reagents, or other operations to be performed in many places at a time. From this viewpoint, FIG. 1 is a schematic diagram merely showing the components of the measurement system 101. Specifically, a relative position among the components of the measurement system 101 is a design option to be determined according to conditions such as rotation behavior of the wheel of the reaction-vessel holder unit 105.

Next, a configuration of the control analysis system 201 of the automatic analyzer 1 is described. The control analysis system 201 includes an analysis calculation unit 202 which performs a calculation for analyzing a measurement result in the measurement system 101; an input unit 203 which receives an input of information needed for the analysis of the specimen and operation instruction signal of the automatic analyzer 1; an output unit 204 which outputs information including an analysis result; a memory unit 205 which stores therein the information including the analysis result; and a control unit 206 which controls the automatic analyzer 1.

The input unit 203 is realized by a keyboard, a mouse, a microphone, and the like. Further, the output unit 204 is realized by a display (such as a CRT, liquid crystal, plasma, and organic EL display), a printer, a speaker, and the like.

The memory unit 205 includes a hard disk which magnetically stores therein various kinds of information, and a memory where a program for a process is loaded from the hard disk when the automatic analyzer 1 performs a process, and the program is electrically stored in the memory. Further, the memory unit 205 may additionally include a secondary memory unit which can read information stored in a memory medium such as a flexible disk, a CD-ROM, a DVD-ROM, a MO disk, a PC card, and an xD-Picture Card.

The control unit 206, which reads the program stored in the memory unit 205, performs an analysis calculation using the measurement result in the measurement system 101 and a control of various kinds of operations of the automatic analyzer 1.

When the control analysis system 201 having the configuration above receives a measurement result from the photometry unit 112, the analysis calculation unit 202 calculates an amount of light emitted by the reaction liquid in the reaction vessel 51 based on the measurement result transmitted from the photometry unit 112, and quantitatively obtains components and the like of the reaction liquid by using, in addition to the calculation result, a calibration curve obtained from a reference specimen and an analysis parameter included in analysis information. The analysis result obtained as above is output from the output unit 204 and is stored in the memory unit 205.

### <Abnormality Detection Process for Liquid-Surface Position in B/F Cleaning>

Next, an abnormality detection process for the liquid surface position in the B/F cleaning is described. The description below focuses on a behavior of one nozzle group G, but naturally a similar abnormality detection process is performed for each nozzle group G.

FIG. 3 is an illustration showing an outline of an operation in the B/F cleaning by the cleaning unit 110. As shown in FIG. 3, the nozzle drive unit 3 controlled by the control unit 206 moves the nozzle group G up and down relative to the reaction vessel 51, and repeatedly carries out the suction of liquid which has underwent the immunological reaction and which is contained in the reaction vessel 51, and the discharge of the B/F cleaning fluid a predetermined number of times.

More specifically, firstly the nozzle group G is moved down toward the reaction vessel 51 containing liquid L1, which is the reaction liquid having underwent the immunological reaction (State 1-1). The air nozzle 2a previously sucks in air from the distal end by a suction operation of the piston 6b driven by the piston drive unit 7 before or during the movement of the nozzle group G. After the nozzle group G is moved down all the way and thus stopped, the air nozzle 2a which has sucked in air starts to discharge air with the piston 6b driven by the piston drive unit 7.

Next, the suction nozzle 2b sucks in the liquid L1 in the reaction vessel 51 (State 1-2). After the suction is carried out for a predetermined time, the discharge nozzle 2c discharges a predetermined amount of the B/F cleaning fluid L_{BF} (State 1-3). As can be seen from FIG. 3, at the time when the B/F cleaning fluid L_{BF} discharged from the discharge nozzle 2c finishes discharging, the liquid surface of liquid L2, which is a mixture of the liquid L1 and the B/F cleaning fluid L_{BF}, needs to be below a lower end of the discharge nozzle 2c in order to prevent the contamination, the carry-over, and the like. Finally, the nozzle group G is moved up by the nozzle drive unit 3 (State 1-4), and thus a series of operations is completed. After that, the series of operations in States 1-1 to 1-4 is repeatedly carried out predetermined times.

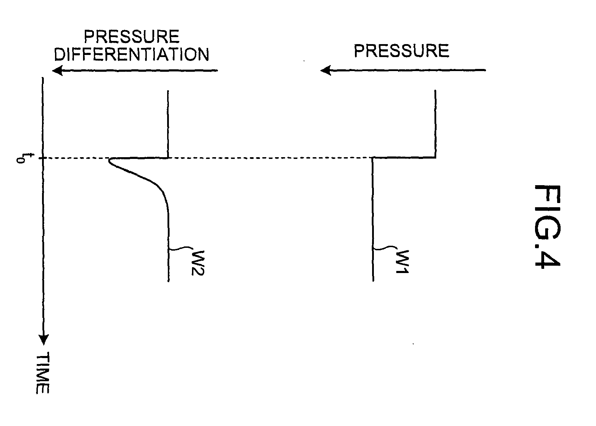

FIG. 4 is an illustration showing time change of air pressure in the pipe 81 in the vicinity of the proximal end of the air nozzle 2a and a differential value of the pressure (pressure differentiation). The waveform W1 and the pressure differentiation waveform W2 shown in FIG. 4 (positive in a downward direction in FIG. 4) represent outputs of the output unit 204 as a result of a calculation of detected air pressure performed by the analysis calculation unit 202, when the air pressure applied inside the pipe 81 positioned above the distal end of the air nozzle 2a by a predetermined distance h (>0) is detected by the pressure sensor 4.

FIG. 4 shows a case where the discharge nozzle 2c starts to discharge the B/F cleaning fluid L_{BF} at time to. Specifically, the waveform W1 shows a constant value which is different between before and when the discharge nozzle 2c discharges the B/F cleaning fluid L_{BF}. Therefore, the pressure differentiation waveform W2 drastically rises just after time to, and then asymptotically returns to the value before the rising so as to become constant again. When pressure or air pressure changes as shown by the waveform W1 or the pressure differentiation waveform W2, the control unit 206 determines that the operation of the cleaning unit 110 is normal.

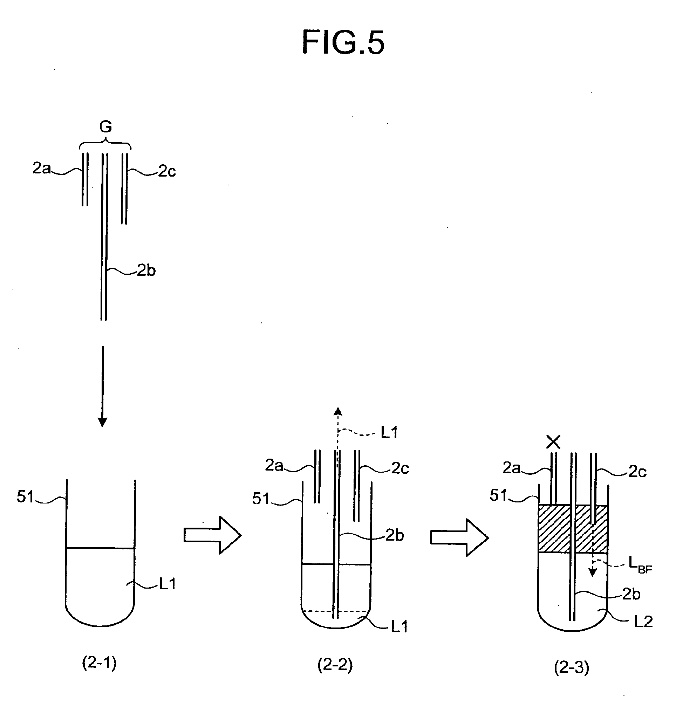

FIG. 5 is an illustration showing an example of a liquid-surface abnormality caused due to a failure of the suction operation of the suction nozzle 2b when the cleaning unit 110 carries out the B/F cleaning according to a procedure similar to the above. FIG. 5 shows a case where a certain failure occurs and a sufficient amount of the liquid L1 is not sucked in upon the suction of the liquid L1 by the suction nozzle 2b after the nozzle group G is moved down at State 2-1 (State 2-2). As a result, when the discharge nozzle 2c discharges the B/F cleaning fluid L_{BF}, a liquid amount of the liquid L2 becomes larger than that in a normal state (shaded area in FIG. 5), and while the B/F cleaning fluid L_{BF} is discharged by the same amount as that in the normal state, the liquid surface of the liquid L2 moves upward until reaching the distal end of the air nozzle 2a so that the distal end of the air nozzle 2a is closed up by the liquid L2 (State 2-3).

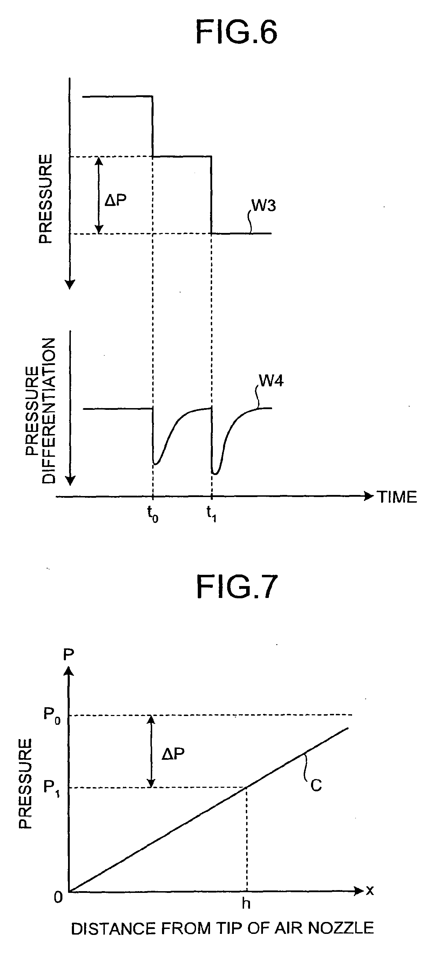

FIG. 6 is an illustration (positive in a downward direction in FIG. 6) showing an outline of the time change of the air pressure detected by the pressure sensor 4 and the pressure differentiation thereof when the suction operation of the suction nozzle 2b is abnormal as above. In the case shown in FIG. 6, the waveform W3 drastically changes at time to and t₁, and the waveform W4 also drastically rises two times, i.e., time t₀ and t₁ along with the change of the waveform W3. Of the changes, the change of each waveform at time to indicates that the discharge nozzle 2c starts to discharge the B/F cleaning fluid L_{BF} similarly to the normal state. On the other hand, the change of each waveform at time t₁ indicates that the liquid surface of the liquid L2 moves up to the distal end of the air nozzle 2a and thus closes the distal end of the air nozzle 2a (see State 2-3 in FIG. 5).

When an abnormality of a liquid-surface position in the reaction vessel 51 is detected based on the behavior of the pressure and the pressure differentiation, the control unit 206 transmits a control signal to stop the drive of the piston drive unit 11, resulting in stopping the B/F-cleaning-fluid discharging operation of the discharge nozzle 2c. As a result, an overflow of the liquid L2 from the reaction vessel 51 can be prevented beforehand.

FIG. 7 is an illustration showing a relation between distance from the distal end of the air nozzle 2a to the pressure sensor 4 and the air pressure in the pipe 81 detected by the pressure sensor 4. As shown in FIG. 7, the air pressure P depends on a position where the pressure sensor is provided, and is proportional to the distance x from the distal end of the air nozzle 2a. Therefore, a linear curve C showing the relation between the pressure P and the distance x from the distal end of the air nozzle 2a in FIG. 7 is represented by P = kx, where k (>0) is a proportional constant.

On the other hand, the air pressure when the distal end of the air nozzle 2a is closed is a constant value P₀ regardless of the value of x (in other words, regardless of a position of the pressure sensor 4). Therefore, a variation ΔP of pressure detected by the pressure sensor 4 changes depending on the position of the pressure sensor 4, around the time when the liquid L2 rises to the distal end of the air nozzle 2a and closes the distal end of the air nozzle 2a. FIG. 7 illustrates a value of ΔP, that is, P₀ - P₁ (= P₀ - kh) when the pressure sensor 4 is arranged at a position where x = h (see FIG. 2).

As can be seen in FIG. 7, if the pressure sensor 4 is near the distal end of the air nozzle 2a and the value of x is relatively low, an error is likely to occur in a measurement because not only a low air pressure is detected with the syringe 6 activated but also the value of ΔP becomes high. On the other hand, if the pressure sensor 4 is far away from the distal end of the air nozzle 2a and the value of x is relatively high, the detected pressure is high but ΔP is low, requiring accurate detection. Accordingly, in order to accurately detect an abnormality of the liquid-surface position in the reaction vessel 51 based on the air pressure and the pressure differentiation, it is preferable to optimize a position where the pressure sensor 4 is arranged, with consideration into the sensitivity of the pressure sensor 4.

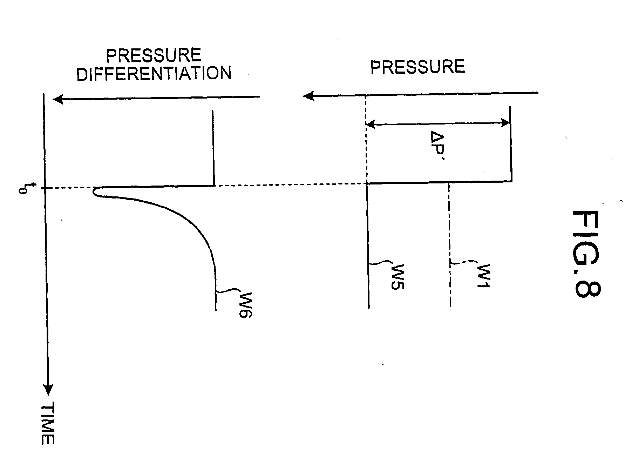

FIG. 8 is an illustration showing time change of air pressure when an abnormality of the liquid-surface position is detected in an aspect different from that in FIG. 6 and pressure differentiation thereof (positive in a downward direction in FIG. 8). For the pressure waveform W5 shown in FIG. 8, a pressure at time to when the air nozzle 2a starts to discharge air is higher than those of the pressure waveform W1 and the pressure waveform W3, and variation thereof is ΔP'. The pressure differentiation waveform W6 also rises at time to along with the change of the waveform W5 more drastically than the pressure differentiation waveforms W2 and W4. This means a case where the liquid L2 rises to an extent of reaching the distal end of the air nozzle 2a. In this case, just after the discharge of air is started, the discharge nozzle 2c is controlled by the control unit 206 to stop the discharging process.

The embodiment of the present invention described above includes a plurality of air nozzles that discharge air from above each of the distal ends of a suction nozzle and a discharge nozzle, the suction nozzle sucking in at least some of reaction liquid undergoing a heterogeneous reaction, the discharge nozzle discharging a predetermined B/F cleaning fluid, the air nozzles being provided corresponding respectively to a plurality of pairs of the suction nozzle and the discharge nozzle; a syringe that supplies air to the plurality of air nozzles at a time; a plurality of pressure sensors each of which detects a pressure of air which is supplied by the syringe and which is in the vicinity of each proximal end of the air nozzles; and a control unit that individually controls the B/F-cleaning-fluid discharging operation of the discharge nozzles based on the respective pressures detected by the plurality of pressure sensors and changes in the pressures. Accordingly, in the B/F cleaning of the reaction liquid undergoing the heterogeneous reaction, an abnormality of the liquid-surface position of the reaction liquid contained in the reaction vessel can be accurately detected and maintenance can be easily performed.

Further, the embodiment includes one syringe, which supplies air for the plurality of air nozzles at a time. Accordingly, it includes a low number of components and the circuitry of a control unit or the like has a reduced size, compared with a case where air is supplied for the air nozzles individually. Therefore, it is possible to provide a low-cost, space-saving apparatus.

Although the exemplary embodiments of the present invention have been described in detail so far, the present invention is not limited to any one of the embodiments. For example, instead of using the reaction vessel as the solid phase, a particulate carrier (a bead) made of glass, plastic or the like having a diameter of 5 to 10 mm may be used. In this case, the automatic analyzer may further include a carrier container unit for containing a carrier, and a carrier transfer unit which transfers the carrier from the carrier container unit to the rector vessel.

Further, as the solid phase, magnetic particles each having a diameter of at most about 1 µm (about 0.2 to 0.8 µm, preferably 0.4 to 0.6 µm) may be used. In this case, the magnetic particles are gathered in a specific location inside the reaction vessel by applying a magnetic field to the reaction vessel from outside in the B/F cleaning.

Further, the present invention may be applied to a case where the liquid surface of a cleaning fluid, a reaction liquid or the like of the automatic analyzer which performs a biochemical or genetic analysis with the heterogeneous reaction is detected.

As such, the present invention may be applied to a variety of embodiments not described herein, and various modifications such as design options may be made without departing from the spirit of the inventive concept defined by the claims.

### INDUSTRIAL APPLICABILITY

As described above, the present invention is useful for an automatic analyzer which automatically and successively analyzes components of a specimen by making the specimen and a reagent reacted, and particularly useful for performing an immunological analysis on the components of the specimen.

## Claims

1. A cleaning apparatus comprising a plurality of pairs of a suction nozzle for sucking in at least some of reaction liquid undergoing a heterogeneous reaction and a discharge nozzle for discharging a predetermined B/F cleaning fluid, to perform a B/F cleaning of the reaction liquid, the cleaning apparatus comprising:
a plurality of air nozzles that is provided corresponding respectively to the plurality of pairs and discharges air from above each of distal ends of the suction nozzle and the discharge nozzle of a corresponding pair;
an air supply unit that supplies air to the plurality of air nozzles at a time;
a plurality of pressure sensors each of which detects a pressure of air which is supplied by the air supply unit and which is in the vicinity of each proximal end of the air nozzles; and
a control unit that individually controls B/F-cleaning-fluid discharging operation of the discharge nozzles based on the respective pressures detected by the plurality of pressure sensors and changes in the pressures.

2. The cleaning apparatus according to claim 1, wherein
the control unit stops the B/F-cleaning-fluid discharging operation of the discharge nozzle corresponding to an air nozzle, out of the plurality of air nozzles, in which each of a pressure in the vicinity of the proximal end and a change in the pressure are a value outside a predetermined range.

3. An automatic analyzer that analyzes a specimen to be analyzed by causing a heterogeneous reaction on the specimen, the automatic analyzer comprising the cleaning apparatus according to claim 1 or 2.
